# FASCICULE DE BREVET EUROPEEN

(11) **EP 0 496 672 B1**
(45) Date de publication et mention de la délivrance du brevet: **17.07.1996**
(21) Numéro de dépôt: 92400162.1
(22) Date de dépôt: 22.01.1992
(51) Int. Cl.: G01N 27/414

(54) **Capteur pour la détection d'espèces chimiques ou de photons utilisant un transistor à effet de champ**
Messfühler zur Detektion chemischer Substanzen oder von Photonen unter Benutzung eines Feldeffekttransistors
Sensor for detecting chemical species or photons using a field effect transistor

(30) Priorité: 24.01.1991 FR 9100801
(43) Date de publication de la demande: 29.07.1992
(73) Titulaire: COMMISSARIAT A L'ENERGIE ATOMIQUE Etablissement de Caractère Scientifique Technique et Industriel, F-75015 Paris (FR)
(72) Inventeur: Barraud, André, F-91440 Bures-sur-Yvette (FR)
(74) Mandataire: Des Termes, Monique

(56) Documents cités:
- DE-A- 3 229 205
- DE-A- 3 417 137
- GB-A- 2 160 356

## Description

La présente invention concerne un capteur utilisable pour la détection d'espèces chimiques ou de photons, et plus précisément un capteur utilisant un transistor à effet de champ.

Depuis quelques années, on a tenté de développer des capteurs de gaz à semiconducteur utilisant des transistors à effet de champ en technologie MOS (métal-oxyde-semiconducteur) ou en technologie MIS (métal-isolant-semiconducteur). Le principe de base de ces capteurs est la mesure de la variation du courant inverse du transistor en fonction de la nature du gaz et la partie sensible du détecteur est principalement formée par une fine membrane de palladium qui joue le rôle de grille.

On peut aussi utiliser des transistors à effet de champ comme capteurs d'ions en utilisant comme grille du transistor une membrane qui provoque la séparation des charges à la surface de façon sélective vis-à-vis de certains ions.

Les capteurs de gaz ou d'ions de ce type sont peu développés actuellement car ils présentent l'inconvénient de nécessiter une modification de la grille de commande du transistor à effet de champ, et ceci doit être effectué lors de la fabrication du transistor pour inclure l'élément sensible aux gaz ou aux ions à la place de la grille classique.

De ce fait, le coût de revient de tels capteurs est élevé puisqu'il suppose une modification des chaînes de fabrication, ce qui est incompatible avec les exigences du marché.

La présente invention a précisément pour objet un capteur pour la détection d'espèces chimiques ou de photons, qui utilise un transistor à effet de champ standard, sans modification coûteuse de la grille de ce transistor en cours de fabrication.

Selon l'invention, le capteur pour la détection d'espèces chimiques ou de photons, comprend
- un transistor à effet de champ (FET) comprenant un substrat en matériau semiconducteur dans lequel sont définies deux zones formant la source et le drain du transistor, une grille en matériau conducteur de l'électricité séparée du substrat par une couche d'isolant électrique ou d'oxyde métallique, et des connexions électriques pour relier respectivement la grille, le drain et la source du transistor à un circuit extérieur,
- des moyens pour appliquer une différence de potentiel V_{GS} entre la grille et la source du transistor,
- des moyens pour appliquer une différence de potentiel V_{DS} entre le drain et la source du transistor,
- un film de matériau électriquement conducteur ou susceptible de le devenir, électriquement sensible à l'espèce chimique ou aux photons à détecter, en contact électrique, d'une part, avec les connexions de la grille du transistor, et, d'autre part, avec les connexions de la zone du substrat (drain ou source) ayant la même polarité que la grille lors d'un fonctionnement normal du transistor, et
- des moyens pour mesurer une variation du courant électrique entre le drain et la source du transistor.

De préférence, pour obtenir une bonne sensibilité, le capteur comprend de plus une résistance de 10 à 10⁶Mohms associée aux moyens d'application de la différence de potentiel V_{GS} de façon à appliquer la tension sur la grille à travers cette résistance.

Avantageusement, le film de matériau sensible est disposé sur la surface externe du transistor en étant en contact électrique uniquement avec la grille et la zone du substrat (drain ou source) qui a la même polarité que la grille lors d'un fonctionnement normal du transistor.

Le capteur de l'invention présente ainsi l'avantage d'utiliser un transistor à effet de champ classique auquel il suffit d'ajouter un film de matériau conducteur- ou susceptible de devenir conducteur, électriquement sensible à l'espèce chimique ou aux photons à détecter, qui est disposé de façon appropriée entre la grille du transistor et la zone du substrat (drain ou source) qui a la même polarité (positive ou négative) que la grille, lorsque le transistor fonctionne normalement.

Avec cette disposition, lorsque le transistor est correctement polarisé, une variation de la résistance électrique du film de matériau sensible sous l'effet de l'espèce chimique ou des photons à détecter entraîne une variation du potentiel de grille du transistor, ce qui se traduit par une variation détectable du courant électrique entre le drain et la source du transistor.

En fonctionnement, il suffit donc d'appliquer au drain, à la source et à la grille du transistor à effet de champ, des tensions appropriées pour qu'une variation de la résistance électrique du film de matériau sensible se traduise, soit par le fonctionnement du transistor et le passage d'un courant électrique entre la source et le drain, soit par un arrêt de ce fonctionnement, soit par une modification de l'intensité du courant électrique entre le drain et la source du transistor.

Le mode de fonctionnement choisi dépend en particulier de la nature du matériau sensible utilisé, qui est un matériau dont la résistance électrique est susceptible de varier par mise en contact avec l'espèce chimique ou les photons à détecter. On peut donc utiliser de nombreux matériaux présentant cette propriété.

Ces matériaux peuvent appartenir aux deux types suivants :
1°) matériau isolant électrique devenant conducteur par réaction avec l'espèce chimique ou les photons à détecter, et
2°) matériau conducteur de l'électricité devenant isolant par réaction avec l'espèce chimique ou les photons à détecter.

Les matériaux appartenant au premier type peuvent être par exemple des complexes à transfert de charge tels que les complexes à transfert de charge de formule DAₓ décrits dans le document FR-A- 2 601 136, qui sont susceptibles de réagir avec une espèce chimique à détecter X pour donner les complexes de formule DAₓX_{y}. Ces complexes à transfert de charge peuvent être en particulier des N-méthyl-4-alkyl-carboxylate pyridinium tétracyanoquinodiméthane, par exemple le N-méthyl-4-octadécylcarboxylate pyridinium tétracyanoquinodiméthane, qui réagissent avec les halogènes comme l'iode, les composés fluorés tels que AsF₅, BF₃ et PF₅, et les oxydes d'azote de formule NO_{z} avec z allant de 1 à 3, pour former des complexes conducteurs. D'autres matériaux appartenant au premier type sont les dérivés de porphyrines, de porphyrazine et de phénanthroline qui sont isolants mais qui deviennent conducteurs par réaction avec des espèces chimiques oxydantes ou complexables telles que l'iode, l'oxygène et les oxydes d'azote.

Parmi les matériaux appartenant au premier type, on peut aussi citer les phtalocyanines et les polymères conjugués, par exemple le polyacéthylène (CH)ₓ, qui sont isolants mais qui peuvent devenir conducteurs sous l'effet de gaz oxydants tels que l'iode et les oxydes d'azote.

On peut encore citer parmi les matériaux appartenant au premier type, des matériaux inorganiques comme les semiconducteurs qui deviennent conducteurs par dopage avec l'espèce à détecter, par exemple des films de SnO₂.

Dans le cas où l'on veut détecter des photons, on peut utiliser comme matériau du premier type, un semi conducteur photosensible comme le sulfure de cadmium.

Les matériaux appartenant au deuxième type peuvent être par exemple des complexes à transfert de charge conducteurs de l'électricité, tels que ceux décrits dans FR-A- 2 564 092 et 2 564 231. Ces complexes peuvent être utilisés pour détecter des espèces telles que l'ammoniaque et les oxydes d'azote de formule NO_{z} avec z allant de 1 à 3 et le benzène.

A titre d'exemple de tels complexes, on peut citer en particulier les iodures de n-alkylpyridinium, TCNQ.

Des complexes conducteurs de ce type dopés à l'iode peuvent être utilisés par exemple pour la détection de gaz réducteurs tels que PH₃, qui réagissent avec l'iode du complexe et provoquent son dédopage. D'autres matériaux appartenant au deuxième type sont les polymères conducteurs comme le polypyrrole qui peuvent devenir isolants ou moins conducteurs par réaction avec un agent réducteur tel que l'ammoniac.

A titre d'exemple d'autres matériaux du deuxième type, on peut encore citer des matériaux inorganiques comme les matériaux semiconducteurs dopés, qui peuvent être compensés par réaction avec l'espèce à détecter.

Selon l'invention, le film de matériau sensible, disposé sur le transistor, a de préférence une épaisseur faible, ne dépassant pas par exemple 100µm pour obtenir une bonne sensibilité vis-à-vis des espèces à détecter.

On peut encore améliorer la sensibilité en utilisant un film formé de couches monomoléculaires, car la sensibilité est améliorée et les temps de réponse sont raccourcis en raison de la structure et de l'organisation des molécules dans un tel film, qui permet aux espèces à détecter de diffuser à l'intérieur du film ; on obtient ainsi un phénomène de masse et non le seul phénomène de surface observé avec un film classique.

Le capteur de l'invention peut être préparé par des procédés simples, par exemple en déposant sur un transistor à effet de champ standard et/ou sur le morceau de circuit imprimé qui le supporte, le film de matériau sensible de façon à ce qu'il ne soit en contact électrique qu'avec les connexions de la grille et les connexions de la zone du substrat (drain ou source) qui aura la même polarité que la grille lors d'un fonctionnement normal du transistor.

Au cours de cette opération, on prendra soin que ledit film ne soit pas en contact avec une autre électrode du dispositif, par exemple en protégeant cette électrode et sa connexion localement par un vernis ou un polymère, éventuellement éliminable si nécessaire par la suite.

Lorsque le film est formé de couches monomoléculaires, on peut réaliser le dépôt du film sur toute la surface du transistor à condition de protéger préalablement les connexions de la zone du substrat qui ne devront pas être en contact électrique avec le film Le dépôt des couches peut être effectué par les techniques habituelles, par exemple par la technique de Langmuir Blodgett.

Lorsque le film est déposé par la technique de Langmuir Blodgett sur le transistor ou sur le circuit imprimé support, il suffit de limiter la profondeur d'immersion pour que le film n'atteigne pas l'électrode indésirable.

Lorsque le film est réalisé par des techniques classiques, par exemple par pulvérisation, on peut également protéger temporairement les connexions qui ne devront pas être en contact électrique avec le film déposé.

Pour réaliser la détection d'une espèce chimique ou de photons avec le capteur de l'invention, on met en contact le capteur avec le fluide (gaz ou liquide) contenant l'espèce à détecter après que le capteur ait été correctement polarisé, et on mesure l'intensité du courant entre drain et source afin de détecter une variation de cette intensité qui sera représentative de la présence de l'espèce à détecter.

Généralement, le capteur est réversible, c'est-à-dire que l'on peut retrouver l'état du film de départ après un traitement approprié.

Dans certains cas, cela n'est toutefois pas possible et le capteur ne peut fonctionner qu'en doseur intégré.

Pour améliorer la précision des mesures, on peut aussi mettre en oeuvre un montage différentiel utilisant deux capteurs identiques dont l'un seulement est soumis à l'espèce à détecter. Un tel montage est décrit par exemple dans EP-A- 0 251 934.

Les espèces chimiques qui peuvent être détectées par le capteur de l'invention peuvent être très diverses.

A titre d'exemple, ces espèces peuvent être des gaz oxydants comme l'iode les oxydes d'azote et l'oxygène, des gaz réducteurs comme PH₃ et des composés comme SO₂ et SH₂.

D'autres caractéristiques et avantages de l'invention apparaîtront mieux à la lecture de la description qui suit donnée bien entendu à titre illustratif et non limitatif en référence au dessin annexé sur lequel
- la figure 1 représente un transistor MOSFET modifié selon l'invention,
- la figure 2 représente le circuit utilisé avec ce transistor pour détecter une espèce chimique ou des photons, et
- la figure 3 est un diagramme représentant la variation de l'intensité du courant I_{DS} entre le drain et la source du transistor en fonction de la différence de potentiel V_{GS}, dans le cas d'un transistor modifié conformément à l'invention.
- la figure 4 représente un autre transistor MOSFET modifié selon l'invention.

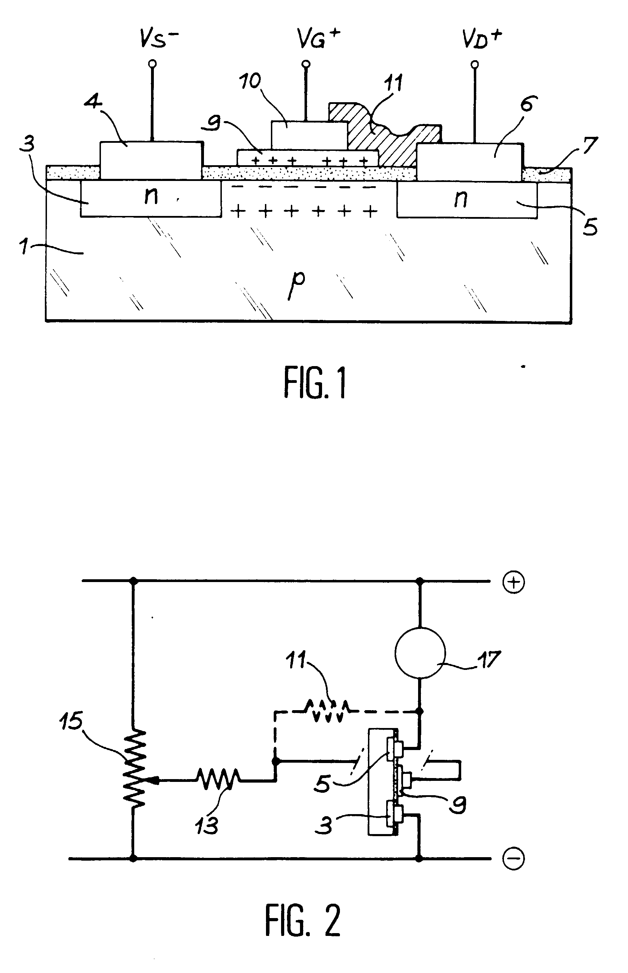

Sur la figure 1, on a représenté un transistor MOSFET à canal n à enrichissement. Dans ce cas, le transistor comprend un substrat (1) qui peut être constitué par une plaquette de silicium dopé p dans laquelle on a délimité les zones de source (3) et de drain (5) par diffusion d'une impureté n. L'ensemble est recouvert d'une couche (7) de SiO₂ et une grille (9) en aluminium est disposée sur la couche de SiO₂ entre la source (3) et le drain (5). Les connexions électriques de source (4), de drain (6) et de grille (10) permettent de relier le transistor à un circuit extérieur.

Dans un tel transistor, pour qu'un courant puisse passer entre la source (3) et le drain (5), il est nécessaire de polariser positivement la grille (9) et le drain (5) et de polariser négativement la source (3), en appliquant de plus une tension V_{GS} supérieure à la tension de seuil.

En effet, en polarisant la grille positivement, les trous vont repousser ceux du substrat en surface. Les électrons minoritaires vont être attirés, une inversion de polarité va se produire, créant un mince canal n entre le drain et la source lorsque la tension V_{GS} est supérieure à la tension de seuil.

Selon l'invention, on modifie ce transistor en lui ajoutant un film (11) d'un matériau sensible à l'espèce chimique ou aux photons à détecter, qui est disposé entre la grille et le drain puisque dans ce cas, le drain est la zone du substrat ayant la même polarité que la grille.

Ceci peut être effectué en déposant sur la partie supérieure du transistor, le film (11) de matériau sensible de façon à ce qu'il soit en contact électrique uniquement avec les connexions électriques (10)et (6) de la grille et du drain.

Dans ce but, on peut utiliser des techniques classiques en microélectronique, par exemple protéger la surface du transistor qui ne doit pas être recouverte de film.

Sur la figure 2 on a représenté un circuit pour utiliser le transistor à effet de champ de la figure 1 comme capteur conformément à l'invention.

Sur cette figure on a représenté schématiquement le drain (5), la source (3) et la grille (9) du transistor ainsi que le film (11) en matériau électriquement sensible.

Pour faire fonctionner le capteur, on applique sur le drain une tension positive V_{D} et sur la source une tension négative V_{S} en reliant les connexions éléctriques de drain et de source à une source d'énergie extérieure, et on applique sur la grille à travers une résistance électrique (13) une tension positive V_{G} dont la valeur est réglée au moyen d'un potentiomètre (15). Un ampèremètre (17) permet de détecter le courant qui circule entre le drain et la source du transistor.

La résistance (13) sert à régler la sensibilité du capteur qui est grossièrement proportionnelle à cette résistance. On peut utiliser des résistance de 10 à 10⁶Mohms.

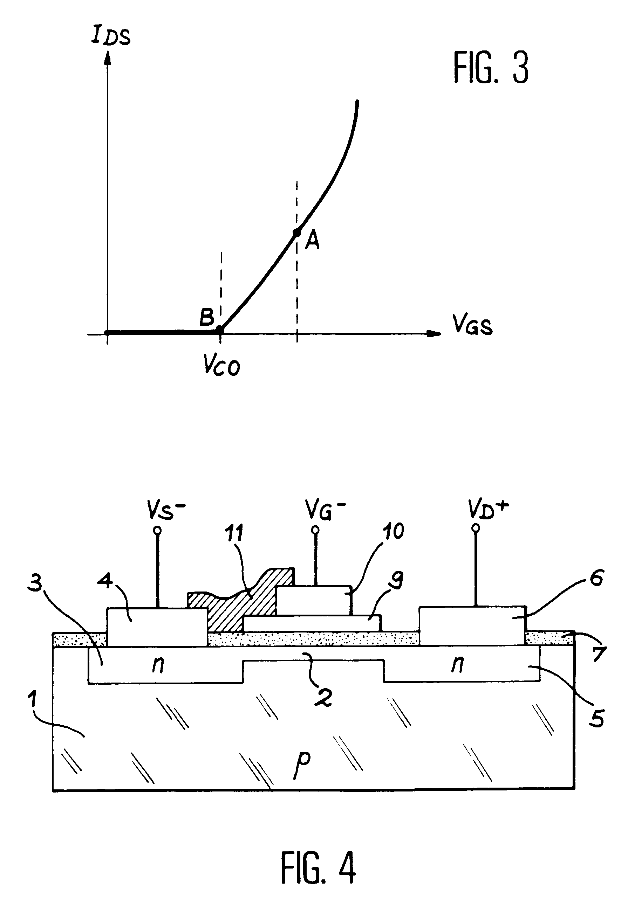

Sur la figure 3, on a représenté la variation de l'intensité du courant I_{DS} entre le drain et la source du transistor lorsqu'on applique une différence de potentiel V_{DS} constante entre le drain et la source et que l'on fait varier la différence de potentiel V_{GS} appliquée entre la grille et la source.

Sur cette figure on voit que l'intensité du courant est nulle jusqu'au moment (point B) où l'on atteint une différence de potentiel V_{GS} correspondant à la tension de seuil nécessaire pour faire fonctionner le capteur avec le film (11) non modifié par l'espèce à détecter. Après cette valeur de seuil, quand on augmente la tension V_{GS} le courant augmente avec la valeur de la tension V_{GS}.

Pour utiliser le capteur de l'invention, pour la détection d'espèces chimiques ou de photons, plusieurs modes de fonctionnement peuvent être envisagés selon que le film (11) est conducteur de l'électricité ou au contraire isolant, au départ.

Dans le premier cas où le film (11) est isolant, on peut détecter une espèce capable de rendre ce film conducteur en polarisant le transistor de façon que la tension V_{GS} soit égale à la valeur de la tension de seuil V_{CO} pour ce montage. Lorsque le film (11) deviendra conducteur sous l'influence de l'espèce à détecter, la tension de grille V_{GS} augmentera et pourra prendre la valeur correspondant au point A ; de ce fait, un courant pourra être détecté par l'ampèremètre (17).

Bien entendu, on pourrait également se situer à un point de fonctionnement du transistor correspondant à d'autres points de la courbe de la figure 3, par exemple en dessous de la tension de seuil V_{CO} si l'on veut détecter l'espèce chimique seulement à partir d'une concentration donnée de cette espèce. On pourrait aussi se placer sur la courbe de fonctionnement du capteur correspondant à un point situé au-delà de V_{CO} pour détecter l'espéce chimique par variation de l'intensité du courant I_{DS}.

Dans le deuxième cas où le film (11) est conducteur de l'électricité en l'absence de l'espèce à détecter, et devient moins conducteur en présence de cette espèce, on peut régler le capteur au-delà de la tension de seuil V_{CO}, par exemple au point A de la courbe de la figure 3 pour détecter une diminution de l'intensité du courant I_{DS} par augmentation de la résistance électrique du film (11).

Dans l'exemple donné ci-dessus, on a utilisé un transistor MOSFET du commerce à canal n à enrichissement, mais l'invention s'applique bien évidemment à tous les types de transistors à effet de champ à condition bien entendu de toujours disposer le film de matériau sensible à l'espèce à détecter, entre la connexion de grille et la connexion de la zone ayant la même polarité que la grille.

Sur la figure 4, on a représenté le cas où cette zone de même polarité est la source du transistor.

Dans ce cas, le transistor est un transistor MOS à canal n à appauvrissement qui comprend un substrat constitué par exemple par une plaquette (1) de silicium dopé p dans lequel on a défini deux zones de polarité opposée n constituant respectivement la source (3) et le drain (5) reliés par un canal réel n (2). Comme dans le cas de la figure 1, le substrat est recouvert d'une couche de SiO₂ (7) et la grille (9) est réalisée au-dessus de la couche (7) entre la source et le drain. Des connexions électriques de source (4), de grille (10) et de drain (6) sont également réalisées. Dans le cas de ce transistor, pour faire fonctionner le transistor, il faut polariser la grille négativement comme la source, par rapport au drain qui est polarisé positivement.

Aussi, conformément à l'invention, avec ce type de transistor, on réalise le film (11)de matériau électriquement sensible à l'espèce ou aux photons à détecter entre les connexions (4) de la source et les connexions (10) de la grille.

Les exemples suivants illustrent des capteurs conformes à l'invention.

### Exemple 1.

Dans cet exemple, on utilise comme capteur un transistor MOSFET au silicium à canal n à enrichissement,associé à un film sensible constitué par 21 couches monomoléculaires d'une porphyrine amphiphile qui devient conductrice en présence d'un gaz oxydant.

La porphyrine utilisée est la tétra N-heptadécylpyridinium porphyrine de fer répondant à la formule suivante:

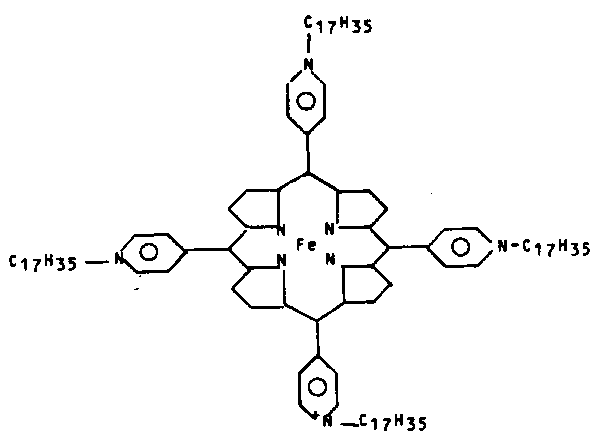

On la désignera, ci-après, sous le nom de porphyrine A.

On dépose 21 couches de cette porphyrine A sur un transistor MOSFET silicium du commerce par la méthode de Langmuir Blodgett en utilisant par exemple une solution à 10⁻³N de cette porphyrine dans le chloroforme et en comprimant la couche à une tension superficielle de 35mN/m. On utilise ensuite le capteur dans le schéma représenté sur la figure 2 en polarisant le drain, la source et la grille, de façon à être situé au point B de la courbe de la figure 3 où il ne passe aucun courant électrique entre le drain et la source. L'introduction de 1 pour mille d'iode sur le capteur permet de détecter avec l'ampèremètre (17) un courant électrique d'environ 1mA lorsque la résistance (13) a une valeur de 1000Mohms et ceci au bout de 2s. On peut ensuite remettre le capteur au point B en effectuant un balayage du film (11) avec de l'air pur pendant 1min.

On peut aussi utiliser ce capteur pour détecter NO₂, mais le temps de réponse est un peu plus long puisqu'il est de 30s pour observer également un courant d'environ 1mA.

### Exemple 2.

On suit le même mode opératoire que dans l'exemple 1 pour préparer un capteur MOSFET comportant un film formé de 21 couches monomoléculaires de porphyrine acide paratétraphényl-2-oxyoctadécanoïque de cobalt II, répondant à la formule suivante :

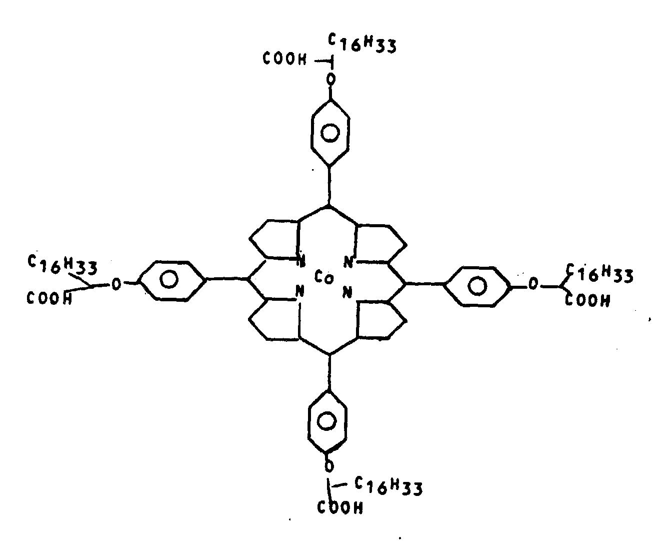

Cette porphyrine peut être préparée en suivant le même mode opératoire que dans l'exemple 6 du document FR-A- 2 601 136. Avec cette porphyrine B, on peut détecter de la même façon 1 pour mille de NO₂ ou d'iode avec un temps de réponse de l'ordre de 2s pour l'iode et 30s pour NO₂.

Dans les exemples 1 et 2 qui concernent tous deux les porphyrines, le choix du métal central et des substituants acides ou basiques permet d'adapter la porphyrine à l'atmosphère à contrôler et en particulier d'éviter certains gaz interférents.

### Exemple 3.

Dans cet exemple, on utilise un film mince de phtalocyanine déposé entre les connexions de grille et les connexions de drain d'un transistor MOSFET au silicium pour détecter du NO₂.

Dans ce cas, on dépose le film mince de phtalocyanine par évaporation sous vide de façon à ce qu'il présente une épaisseur de 200nm environ, en protégeant la connexion de source au moment du dépôt par un vernis.

On polarise ensuite le transistor à effet de champ de façon à être situé au point B de la courbe de la figure 3 et l'admission de 1 millième de NO₂ dans le récipient contenant le capteur conduit à un courant I_{DS} de 0,1 à 0,5mA lorsque la résistance (13) est une résistance de 1000Mohms. Après détection de NO₂, on peut ramener le capteur au point B en soumettant le film de phtalocyanine à un balayage à l'azote sec pendant quelques minutes.

### Exemple 4.

Cet exemple illustre l'utilisation d'un capteur constitué par un transistor MOSFET au silicium associé à un film isolant de polyacétylène (CH)ₓ qui peut devenir conducteur lorsqu'il est oxydé par un gaz oxydant.

Dans ce cas, on réalise un dépôt de polyacétylène de environ 1µm d'épaisseur par réaction chimique de synthèse sur le support du transistor, puis on polarise le capteur pour se situer au point B de la courbe de la figure 3. On peut ainsi observer une augmentation du courant électrique lors de l'introduction de NO₂ ou de vapeur d'eau dans le récipient contenant le capteur.

On peut ainsi obtenir une faible augmentation du courant I_{DS} mais on peut augmenter la sensibilité du capteur par un facteur de 10 à 20 en effectuant tout d'abord une cinquantaine de cycles consistant à mettre en contact le capteur avec du NO₂ puis avec de l'azote pur pour restituer son état isolant.

Avec ce capteur, la réversibilité est bonne dans l'azote mais elle est incomplète dans l'air.

### Exemple 5.

Dans cet exemple, on utilise un capteur comportant un film sensible constitué de 20 couches monomoléculaires d'un complexe à transfert de charge dopé pour être conducteur, qui devient isolant par réaction de l'élément de dopage avec le gaz à détecter, par exemple avec un gaz réducteur dans le cas où l'élément dopant est l'iode.

Le complexe à transfert de charge utilisé est le N-docosylpyridiniumtétracyanoquinodiméthane dopé à l'iode.

Dans ce cas, on peut utiliser également la technique de Langmuir Blodgett pour déposer les 20 couches monomoléculaires de ce complexe entre les connexions de grille et de drain du transistor à effet de champ comme représenté sur la figure 1. Ce dépôt peut être réalisé à partir d'une solution du complexe dans le dichlorométhane, sous une tension superficielle de 35mN/m, suivi d'un traitement par l'iode.

Dans ce cas, on polarise le transistor à effet de champ de façon à se trouver au point A de la courbe de la figure 3 qui correspond au passage d'un courant électrique entre le drain et la source. Lorsque le film se trouve en présence de phosphine PH₃ qui est un gaz réducteur, à une concentration inférieure au millième, le courant drain-source du transistor diminue de 0,5mA en 10min. On peut ensuite revenir au point A par un balayage à l'azote afin de retrouver le courant d'origine.

### Exemple 6.

Dans cet exemple on utilise un film de matériau inorganique sensible à l'espèce chimique à détecter.

Ce film est un film de sulfure de mercure formé de monocouches de sulfure de mercure insérées dans les plans polaires de couches monomoléculaires organiques.

Pour former le film, on dépose tout d'abord par la technique de Langmuir Blodgett, 50 couches monomoléculaires d'acide béhénique de façon à former un film organique reliant les connexions électriques de grille et de drain, puis on trempe le transistor ainsi revêtu dans une solution de mercure divalent à pH 8 et on le soumet à un courant gazeux de H₂S à faible pression pour obtenir un film sensible constitué de couches monomoléculaires de sulfure de mercure disposées entre les couches d'acide béhénique d'origine.

Ensuite, on règle les tensions appliquées à la grille, au drain et à la source du capteur, de façon à être situé au point A de la courbe de la figure 3, dans de l'air sec et pur ou dans de l'azote. La résistance R13 doit avoir une valeur comprise entre 10⁴ et 10⁶MΩ. En présence d'une atmosphère polluée, par exemple de gaz carbonique ou de vapeur d'eau, la résistivité du film de sulfure de mercure augmente et le courant tombe à 0. Le temps de réponse est de plusieurs minutes, et une réversibilité totale est obtenue en quelques heures à 20°C dans l'air ou l'azote sec.

### Exemple 7.

Dans cet exemple, on utilise un film sensible formé d'un film semiconducteur de SnO₂ de 100µm d'épaisseur déposé par un procédé classique entre les connexions de grille et les connexions de drain d'un transistor MOSFET au silicium, pour détecter l'oxygène.

Le film de SnO₂ est prédopé avec du SO₂, et il peut être ensuite utilisé pour doser SO₂ ou SH₂ dès la température ambiante, en polarisant le capteur pour qu'il soit situé au point B de la courbe de la figure 3. En effet, la présence de quantités supplémentaires de SO₂ ou SH₂ augmente le courant électrique du capteur qui fonctionne plutôt en doseur intégré car le capteur n'est pas réversible, la conduction électrique d'origine du film ne pouvant être restaurée.

### Exemple 8.

Dans cet exemple, on utilise un film semiconducteur de sulfure de cadmium photosensible de 1 à 100um d'épaisseur, déposé par pulvérisation pour détecter la présence de photons.

Dans ce cas, R₁₃ = 10MΩ et on polarise le capteur de façon à être situé au point B dans l'obscurité et la mise à la lumière induit un fort courant électrique à travers le transistor. Aussi, on protège le capteur en insérant une résistance dans le circuit de la figure 2 entre l'alimentation et le drain.

Le retour au point B prend plusieurs minutes à 20°C dans l'obscurité.

## Revendications

1. Capteur pour la détection d'espèces chimiques ou de photons, caractérisé en ce qu'il comprend :
- un transistor à effet de champ (FET) comprenant un substrat (1) en matériau semiconducteur, dans lequel sont définies deux zones (3 et 5) formant la source et le drain du transistor, une grille (9) en matériau conducteur de l'électricité séparée du substrat par une couche (7) d'isolant électrique ou d'oxyde métallique, et des connexions électriques (10, 6, 4)pour relier respectivement la grille, le drain et la source du transistor à un circuit extérieur,
- des moyens pour appliquer une différence de potentiel V_{GS} entre la grille et la source du transistor,
- des moyens pour appliquer une différence de potentiel V_{DS} entre le drain et la source du transistor,
- un film (11) de matériau électriquement conducteur ou susceptible de le devenir, électriquement sensible à l'espèce chimique ou aux photons à détecter, en contact électrique, d'une part, avec les connexions (10) de la grille du transistor et, d'autre part, avec les connexions (6) de la zone du substrat (drain ou source) ayant la même polarité que la grille lors d'un fonctionnement normal du transistor, et
- des moyens (17) pour mesurer une variation du courant électrique entre le drain et la source du transistor.

2. Capteur selon la revendication 1, caractérisé en ce que le film de matériau sensible est disposé sur la surface externe du transistor en étant en contact électrique uniquement avec la grille et la zone du substrat (drain ou source) qui a la même polarité que la grille lors d'un fonctionnement normal du transistor.

3. Capteur selon l'une quelconque des revendications 1 et 2, caractérisé en ce que le film (11) de matériau électriquement conducteur ou susceptible de le devenir est en contact électrique avec les connexions électriques de la grille et du drain.

4. Capteur selon l'une quelconque des revendications 1 à 3, caractérisé en ce qu'il comprend de plus une résistance (13) de 10 à 10⁶ Mohms associée aux moyens d'application de la différence de potentiel V_{GS} de façon à appliquer la tension sur la grille à travers cette résistance.

5. Capteur selon l'une quelconque des revendications 1 à 4, caractérisé en ce que le matériau électriquement sensible est un matériau organique isolant capable de devenir conducteur de l'électricité par réaction avec l'espèce chimique ou les photons à détecter.

6. Capteur selon la revendication 5, caractérisé en ce que le film est formé de couches monomoléculaires de porphyrine acide paratétraphényl-2-oxyoctadécanoique de cobalt II ou de tétra N-heptadécylpyridinium porphyrine de fer.

7. Capteur selon la revendication 5, caractérisé en ce que le film de matériau électriquement sensible est un film de phtalocyanine d'une épaisseur de 100nm à 1µm.

8. Capteur selon la revendication 5, caractérisé en ce que le matériau électriquement sensible est du polyacétylène.

9. Capteur selon l'une quelconque des revendications 6 à 8, caractérisé en ce que l'espèce à détecter est un gaz oxydant.

10. Capteur pour la détection de photons selon la revendication 5, caractérisé en ce que le film est un film semiconducteur photosensible.

11. Capteur selon la revendication 10, caractérisé en ce que le film est un film de sulfure de cadmium.

12. Capteur selon la revendication 5, caractérisé en ce que le film est un film de matériau semiconducteur inorganique.

13. Capteur selon l'une quelconque des revendications 1 à 4, caractérisé en -ce que le matériau électriquement sensible est un matériau conducteur de l'électricité capable de devenir isolant par réaction avec l'espèce chimique à détecter.

14. Capteur selon la revendication 13, caractérisé en ce que le matériau du film est un complexe à transfert de charge dopé à l'iode pour être conducteur.

15. Capteur selon la revendication 14, caractérisé en ce que le film est formé de couches monomoléculaires de N-docosylpyridinium tétracyanoquinodiméthane dopé à l'iode.

16. Capteur selon la revendication 15, caractérisé en ce que l'espèce chimique à détecter est un gaz réducteur.

## Patentansprüche

1. Meßfühler zur Detektion chemischer Substanzen oder von Photonen, **dadurch gekennzeichnet**, daß er enthält:
- einen Feldeffekttransistor (FET), umfassend ein Substrat (1) aus Halbleitermaterial, in dem zwei die Source und den Drain des Transistors bildende Zonen (3 und 5) definiert sind, ein Gate (9) aus elektrisch leitendem Material, getrennt vom Substrat durch eine Schicht (7) aus einem elektrischen Isolator oder aus Metalloxid, und elektrische Anschlüsse (10, 6, 4), um jeweils das Gate, den Drain und die Source des Transistors mit einem äußeren Stromkreis zu verbinden,
- Einrichtungen zum Anlegen einer Potentialdifferenz V_{GS} zwischen dem Gate und der Source des Transistors,
- Einrichtungen zum Anlegen einer Potentialdifferenz V_{DS} zwischen dem Drain und der Source des Transistors,
- einen Film (11) aus einem Material, elektrisch leitend oder geeignet, es zu werden, elektrisch empfindlich für zu detektierende chemische Substanzen oder Photonen, einerseits in elektrischem Kontakt mit den Anschlüssen (10) des Transistorgates und andererseits mit den Anschlüssen (6) der Zone des Substrats (Drain oder Source), die im Normalbetrieb des Transistors dieselbe Polarität aufweist wie das Gate, und
- Einrichtungen (17) zum Messen einer Veränderung des elektrischen Stroms zwischen dem Gate und der Source des Transistors.

2. Meßfühler nach Anspruch 1, dadurch gekennzeichnet, daß der Film aus empfindlichem Material auf der Außenfläche des Transistors angebracht ist und dabei nur mit dem Gate und der Zone des Substrats (Drain oder Source) in elektrischem Kontakt ist, die bei Normalbetrieb des Transistors die gleiche Polarität hat wie das Gate.

3. Meßfühler nach einem der Ansprüche 1 und 2, dadurch gekennzeichnet, daß der Film (11) aus dem Material, das elektrisch leitend ist oder es werden kann, in elektrischem Kontakt ist mit den elektrischen Anschlüssen des Gates und des Drains.

4. Meßfühler nach einem der Ansprüche 1 bis 3, dadurch gekennzeichnet, daß er außerdem einen Widerstand (13) von 10 bis 10⁶ Megaohm enthält, verbunden mit den Einrichtungen zum Anlegen der Potentialdifferenz V_{GS}, so daß die Spannung durch diesen Widerstand hindurch an das Gate gelegt wird.

5. Meßfühler nach einem der Ansprüche 1 bis 4, dadurch gekennzeichnet, daß das elektrisch empfindliche Material ein isolierendes organisches Material ist, fähig elektrisch leitend zu werden durch Reaktion mit der chemischen Substanz oder den Photonen, die zu detektieren sind.

6. Meßfühler nach Anspruch 5, dadurch gekennzeichnet, daß der Film gebildet wird durch monomolekulare Schichten aus Kobalt(II)-Porphyrin-tetra-p-phenyl-2-Oxyoctadecansäure oder Eisen-Porphyrin-tetra-N-heptadecylpyridinium.

7. Meßfühler nach Anspruch 5, dadurch gekennzeichnet, daß der Film aus elektrisch empfindlichem Material ein Phthalocyanin-Film mit einer Dicke von 100nm bis 1µm ist.

8. Meßfühler nach Anspruch 5, dadurch gekennzeichnet, daß das elektrisch empfindliche Material Polyacetylen ist.

9. Meßfühler nach einem der Ansprüche 6 bis 8, dadurch gekennzeichnet, daß die zu detektierende Substanz ein oxidierendes Gas ist.

10. Meßfühler zur Detektion von Photonen nach Anspruch 5, dadurch gekennzeichnet, daß der Film ein lichtempfindlicher Halbleiterfilm ist.

11. Meßfühler nach Anspruch 10, dadurch gekennzeichnet, daß der Film ein Kadmiumsulfidfilm ist.

12. Meßfühler nach Anspruch 5, dadurch gekennzeichnet, daß der Film ein Film aus anorganischem Halbleitermaterial ist.

13. Meßfühler nach einem der Ansprüche 1 bis 4, dadurch gekennzeichnet, daß das elektrisch empfindliche Material ein elektrisch leitendes Material ist, fähig, isolierend zu werden durch Reaktion mit der zu detektierenden chemischen Substanz.

14. Meßfühler nach Anspruch 13, dadurch gekennzeichnet, daß das Material des Film ein Ladungstransferkomplex ist, dotiert mit Iod, um leitfähig zu werden.

15. Meßfühler nach Anspruch 14, dadurch gekennzeichnet, daß der Film gebildet wird durch monomolekulare Schichten aus N-Docosylpyridinium-tetracyano-chinodimethan, dotiert mit Iod.

16. Meßfühler nach Anspruch 15, dadurch gekennzeichnet, daß die zu detektierende chemische Substanz ein reduzierendes Gas ist.

## Claims

1. Detector for the detection of chemical species or photons comprising a field effect transistor (FET) having a semiconducting material substrate (1) in which are defined two zones (3, 5) forming the source and the drain of the transistor, an electricity conducting material gate (9) separated from the substrate by an electrically insulating or metal oxide layer (7), and electrical connections (10, 6, 4) for respectively connecting the gate, drain and source of the transistor to an external circuit; means for applying a potential difference V_{GS} between the transistor gate and the source; means for applying a potential differ ence V_{DS} between the transistor drain and source; a film (11) made from a material which is or can be made electrically conductive, which is electrically sensitive to the chemical species or the photons to be detected and which is in electrical contact on the one hand with the transistor gate connections (10) and on the other with the connections (6) of the zone of the substrate (drain or source) having the same polarity as the gate during the normal operation of the transistor; and means (17) for measuring a variation of the current between the transistor drain and source.

2. Detector according to claim 1, characterized in that the sensitive material film is placed on the outer surface of the transistor being in electrical contact solely with the gate and the zone of the substrate (drain or source) having the same polarity as the gate during normal transistor operation.

3. Detector according to either of the claims 1 and 2, characterized in that the film (11) made from a material which is electrically conductive or which can be made electrically conductive is in electrical conduction with the gate and drain connections.

4. Detector according to any one of the claims 1 to 3, characterized in that it also comprises a 10⁴ to 10⁶ Mohms resistor associated with means for applying a potential difference V_{GS}, so as to apply the voltage to the gate across said resistor.

5. Detector according to any one of the claims 1 to 4, characterized in that the electrically sensitive material is an organic insulating material which can become conductive by reacting with the chemical species or photons to be detected.

6. Detector according to claim 5, characterized in that the film is formed from monomolecular layers of cobalt II paratetraphenyl-2-oxyoctadecanoic acid porphyrin or iron tetra-N-heptadecyl pyridinium porphyrin.

7. Detector according to claim 5, characterized in that the electrically sensitive material film is a 100 nm to 1 µm phthalocyanin film.

8. Detector according to claim 5, characterized in that the electrically sensitive material is polyacetylene.

9. Detector according to any one of the claims 6 to 8, characterized in that the species to be detected is an oxidizing gas.

10. Detector for the detection of photons according to claim 5, characterized in that the film is a photosensitive semiconductor film.

11. Detector according to claim 10, characterized in that the film is a cadmium sulphide film.

12. Detector according to claim 5, characterized in that the film is an inorganic semiconductor material film.

13. Detector according to any one of the claims 1 to 4, characterized in that the electrically sensitive material is an electrically conductive material, which can become insulating by reacting with the chemical species to be detected.

14. Detector according to claim 13, characterized in that the material of the film is a charge transfer complex doped with iodine in order to become conductive.

15. Detector according to claim 14, characterized in that the film is formed from monomolecular layers of iodine-doped N-docosyl pyridinium tetracyanoquinodimethane.

16. Detector according to claim 5, characterized in that the chemical species to be detected is a reducing gas.
